# EUROPÄISCHE PATENTANMELDUNG

(11) **EP 1 850 424 A2**
(43) Veröffentlichungstag der Anmeldung: **31.10.2007**
(21) Anmeldenummer: 07007687.2
(22) Anmeldetag: 16.04.2007
(51) Int. Cl.: H01R 25/16

(54) **Anschlussdosenleiste**

(30) Priorität: 21.04.2006 DE 102006019198
(71) Anmelder: Popp GmbH, 95460 Bad Berneck (DE)
(72) Erfinder: Niklasch, Markus, 95185 Gattendorf (DE)
(74) Vertreter: Tergau & Pohl Patentanwälte

(57) **Zusammenfassung**

Um insbesondere bei Multimedia-Regalen einen Kabelsalat zu vermeiden, ist eine multifunktionale Anschlussdosenleiste (2) vorgesehen, die mehrere in Reihe angeordnete und von außen zugängliche Anschlussdosen (14) aufweist, die in einem sich in Längsrichtung (12) erstreckenden Traggehäuse (16) integriert sind. Das Traggehäuse (16) übernimmt hierbei eine Tragfunktion für die Multimediageräte (6). Zusätzlich zu den Anschlussdosen (14) ist ein Kabelkanal (26) integriert, der für eine Verlegung weiterer Kabel (44), beispielsweise Audioleitungen, Datenleitungen, etc., von außen zugänglich ist.

## Beschreibung

Die Erfindung betrifft eine Anschlussdosenleiste mit mehreren in Reihe angeordneten und von außen zugänglichen Anschlussdosen.

Eine modular aufgebaute Mehrfachanschlussdosenleiste ist beispielsweise in der EP 0 951 105 A2 beschrieben. Bei dieser Anschlussdosenleiste sind mehrere Steckdosen nach Art eines Baukastensystems unter Ausnutzung des Gleichteileprinzips aneinander gereiht. Hierbei sind einzelne Steckdosen als Moduleinsätze in eine Profilschiene eingeschoben. Die Profilschiene bildet zugleich ein Teilstück des Gehäuses der Anschlussdosenleiste. Durch den modularen Aufbau lassen sich problemlos unterschiedliche Anschlussdosen oder auch Schutzschalter oder dergleichen integrieren.

Derartige Anschlussdosenleisten mit mehreren Steckdosen werden auch bei Endverbrauchern eingesetzt, um mehrere elektrische Geräte mit Strom zu versorgen. Von der Anschlussdosenleiste, die beispielsweise auf dem Boden liegt, gehen dann die einzelnen Netzkabel zu den einzelnen technischen Geräten, beispielsweise HIFI- und TV-Geräte oder auch Bürogeräte, wie Computer, Monitore, Drucker, etc. Als störend wird hierbei oftmals empfunden, dass die einzelnen Kabel lose und sichtbar umher liegen. Insbesondere im Multimedia-Highend-Bereich mit hochwertigen HIFI und TV-Geräten legt der Verbraucher Wert auf ein ansprechendes Design. Um so mehr ist in diesem Fall ein "Kabelsalat" störend.

Der Erfindung liegt die Aufgabe zugrunde, einen derartigen "Kabelsalat" möglichst zu vermeiden.

Die Aufgabe wird gemäß der Erfindung gelöst durch eine Anschlussdosenleiste nach Anspruch 1. Danach ist vorgesehen, dass mehrere Anschlussdosen in einem sich in Längsrichtung erstreckenden Traggehäuse integriert sind und am Traggehäuses ein Tragelement zum Tragen eines elektrischen Geräts angebracht oder anbringbar ist. Die Anschlussdosenleiste hat daher gemäß einem ersten Aspekt eine Doppelfunktion. Neben der Bereitstellung der elektrischen Funktionalität ist ihr nämlich zusätzlich auch noch eine mechanische Tragfunktion zugewiesen. So bildet sie bei einer beispielsweise vertikalen Aufstellung eine mechanische Tragsäule aus, die geeignet ist, die elektrischen Geräte zu tragen. Damit sind die elektrischen Geräte in unmittelbarer Nähe der Anschlussdosen angeordnet. Die Netzstecker der elektrischen Geräte können daher in unmittelbarer Nähe in die dafür vorgesehenen Anschlussdosen eingesteckt werden und es sind keine langen Zuleitungen erforderlich.

Weiterhin ist in dem Traggehäuse ein sich in Längsrichtung erstreckender Kabelkanal zum Einlegen eines weiteren Kabels, beispielsweise Audio- oder Datenkabel, für das elektrische Gerät integriert. Um das Einlegen des weiteren Kabels zu ermöglichen, ist der Kabelkanal von außen zumindest in Teilbereichen zugänglich. Bevorzugt weist hierzu das Traggehäuse einen zum Kabelkanal offenen Längsschlitz auf. Durch diesen zweiten Aspekt lassen sich neben dem Netzkabel auch die weiteren Kabel, wie beispielsweise Lautsprecherkabel oder sonstige Daten-, Kommunikations- oder Versorgungskabel, im in der Anschlussdosenleiste zusätzlichen Kabelkanal verlegen, so dass auch diese weiteren Kabel im Traggehäuse integriert und damit nicht sichtbar sind.

Eine derartige multifunktionale Anschlussdosenleiste, die um eine Tragfunktion erweitert und mit einem durch die Bereitstellung des Kabelkanals integrierten Kabelmanagementsystem ausgestattete ist, ist insbesondere für den Einsatz in einem Geräteträger, insbesondere einem Multimedia-Rack oder -Regal vorgesehen bzw. bildet selbst das Multimedia-Rack, auf dem unmittelbar die entsprechenden Multimediageräte platziert werden können. Bevorzugt bildet hierbei die Anschlussdosenleiste eine zentrale Standsäule, die entweder frei stehend oder auch an der Wand befestigt ist und beispielsweise mit Hilfe von nach Art von Tragarmen ausgebildeten Tragelementen die elektrischen Geräte aufnimmt. Alternativ hierzu ist die Anschlussdosenleiste in einer von mehreren Tragsäulen eines Multimedia-Racks integriert. Außerhalb des Endverbraucher-Bereichs lässt sich eine derartige multifunktionale Anschlussdosenleiste insbesondere auch in Schau- oder Präsentationsräumen oder in Auslagen zur Präsentation von Waren in Ladensystemen einsetzen. Neben der vertikalen, stehenden Anordnung der Anschlussdosenleiste kann diese natürlich auch waagrecht angeordnet werden.

Bevorzugte Weiterbildungen der Anschlussdosenleiste sind den Unteransprüchen zu entnehmen.

Im Hinblick auf die Tragfunktion ist vorgesehen, dass als Tragelement ein nach vorne abstehender Tragarm vorgesehen ist, auf denen das Gerät abstellbar ist. Die Länge des Tragarms entspricht hierbei üblicherweise einem Vielfachen der Tiefe des Traggehäuses. Die Tragelemente können integraler Bestandteil des Traggehäuses sein, also mit diesem einstückig und aus einem Guss ausgebildet sein.

Alternativ hierzu ist vorzugsweise am Traggehäuse eine Halteeinrichtung für das Tragelement vorgesehen. Das Tragelement ist also am Traggehäuse befestigbar bzw. befestigt. Hierzu sind beispielsweise am Traggehäuse Schraub- oder Einstecklöcher oder auch Auflagewinkel für Regalböden vorgesehen, auf die dann die Geräte aufgestellt werden. Bevorzugt ist als Halteeinrichtung ein Befestigungsprofil vorgesehen, und zwar insbesondere eine als Nut- oder Federführung ausgebildetes Führungsprofil. Dieses erstreckt sich insbesondere durchgängig in Längsrichtung und dient zum Aufschieben des Tragelements, welches komplementär zu dem Führungsprofil ausgebildet ist. An Stelle des Aufschiebens kann auch eine Ausgestaltung vorgesehen sein, bei dem das Tragelement in einfacher Weise in das Führungsprofil eingehängt wird.

Um die mechanischen Kräfte sicher aufnehmen zu können, ist das Trägergehäuse zumindest in den Teilbereichen, die zur Aufnahme der Tragkräfte vorgesehen sind, bevorzugt aus Metall ausgebildet.

Zum Anschluss der Anschlussdosenleiste an eine fest installierte Gebäude-Anschlussdose sind zweckdienlicherweise jeweils den Anschlussdosen zugeordnete Anschlussstecker vorgesehen. Im Falle von Stromsteckdosen werden diese über eine gemeinsame mit einem Netzstecker versehene Anschlussleitung versorgt. Ist als Anschlussdose beispielsweise eine Telefondose, eine Netzwerkdose, eine Antennen- oder Satelliten-Dose vorgesehen, so ist diese ebenfalls über eine artspezifische Anschlussleitung innerhalb des Traggehäuses angeschlossen, wobei am Ende diese artspezifischen Anschlussleitung ein artspezifischer Anschlussstecker angeschlagen ist. Dies ist im Falle einer Telefondose beispielsweise ein TAE-Stecker, im Falle eines Netzwerkkabels ein so genannter Western-Stecker, etc.

In einer einfachen Ausführungsvariante sind die Anschlussdosen innerhalb der Anschlussdosenleiste an fest definierten Plätzen angeordnet. Gleichermaßen sind auch die Tragelemente an fest definierten Plätzen angeordnet. In einer zweckdienlichen Weiterbildung sind vorzugsweise die Anschlussdosen als auch die Tragarme in Längsrichtung zumindest teilweise verschiebbar, so dass die Anschlussdosenleiste individuell einstellbar ist. Um diese Längenvariabilität zu ermöglichen ist im Falle von Stromsteckdosen bevorzugt eine Stromschiene innerhalb des Traggehäuses vorgesehen, und die Stromsteckdosen sind über Schleifkontakte mit der Stromschiene elektrisch verbunden. Alternativ hierzu sind die einzelnen Anschlusskabel für die Anschlussdosen derart ausgebildet, dass ein Längenausgleich ermöglicht ist.

Im Hinblick auf eine möglichst einfache und kostengünstige Variante sind die Anschlussdosen in einer von einem Gehäuse abgeschlossenen Baueinheit integriert und diese Baueinheit ist schließlich im Traggehäuse angeordnet. Die Baueinheit bildet hierbei bevorzugt eine herkömmliche Steckdosenleiste mit Versorgungsleitungen und einem daran angeschlossenen Netzstecker aus. Durch diese Maßnahme sind automatisch die gesetzlichen Anforderungen an den elektrischen Funktionsteil der Anschlussdosenleiste erfüllt. Die Baueinheit ist hierbei insbesondere eine Baueinheit gemäß dem in der EP 0 951 105 A2 beschriebenen modularen System einer Mehrfachsteckdose.

Ein Ausführungsbeispiel der Erfindung wird im Folgenden anhand der Figuren näher erläutert. Es zeigen jeweils in vereinfachten Darstellungen:
- Fig. 1: eine perspektivische Vorderansicht auf eine mit Tragarmen versehene Anschlussdosenleiste, die nach Art einer Tragsäule ausgebildet ist, zusammen mit einem elektrischen Gerät,
- Fig. 2: die Anschlussdosenleiste in einer perspektivischen Darstellung ohne Tragarme,
- Fig. 3: einen Tragarm in perspektivischer Darstellung sowie
- Fig. 4: einen Querschnitt durch die Anschlussdosenleiste mit Tragarm auf der Höhe eines Tragarms.

In den Figuren sind gleich wirkende Teile jeweils mit den gleichen Bezugszeichen versehen.

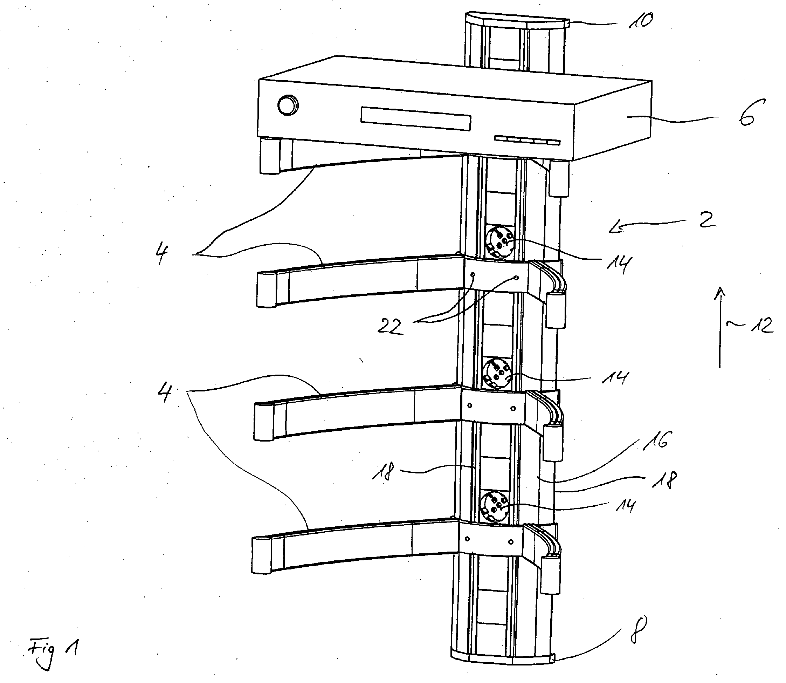

Gemäß Fig. 1 ist eine Anschlussdosenleiste 2 als ein Multimedia-Rack nach Art einer Tragsäule mit nach vorne abstehenden, jeweils zweiarmigen Tragarmen 4 ausgebildet. Die beiden Teilarme der jeweiligen Tragarme 4 definieren hierbei Geräteebenen, auf denen jeweils ein elektrisches Gerät 6, beispielsweise HIFI-, TV- oder sonstige Multimedia-Geräte platzierbar sind. Im Ausführungsbeispiel ist die Anschlussdosenleiste 2 mit einem Fußteil 8, das nach Art einer Abdeckkappe ausgebildet ist, auf einem Fußboden abgestellt. An ihrem oberen Ende wird die Anschlussdosenleiste 2 von einer Abdeckkappe 10 abgeschlossen.

In dem zentralen mittleren Bereich der Anschlussdosenleiste 2 sind in deren Längsrichtung 12 mehrere Strom-Steckdosen 14 als Anschlussdosen verteilt. Diese sind dabei jeweils auf Höhe der durch die Tragarme 4 definierten Geräteebenen und damit unmittelbar hinter den elektrischen Geräten 6 angeordnet. Die Tragarme 4 sind in der Höhe entlang der Längsrichtung 12 frei verstellbar. Hierzu ist an der Vorderseite beidseitig zu den Strom-Steckdosen 14 jeweils ein Führungsprofil 18 über die gesamte Länge der Anschlussdosenleiste 2 ausgebildet.

Die Fixierung erfolgt durch nach Art von Klemmschrauben 20 ausgebildeten Madenschrauben. Diese werden durch Gewindebohrungen 22 im Tragarm 4 hindurchgeschraubt und gegen das Führungsprofil 18 gepresst.

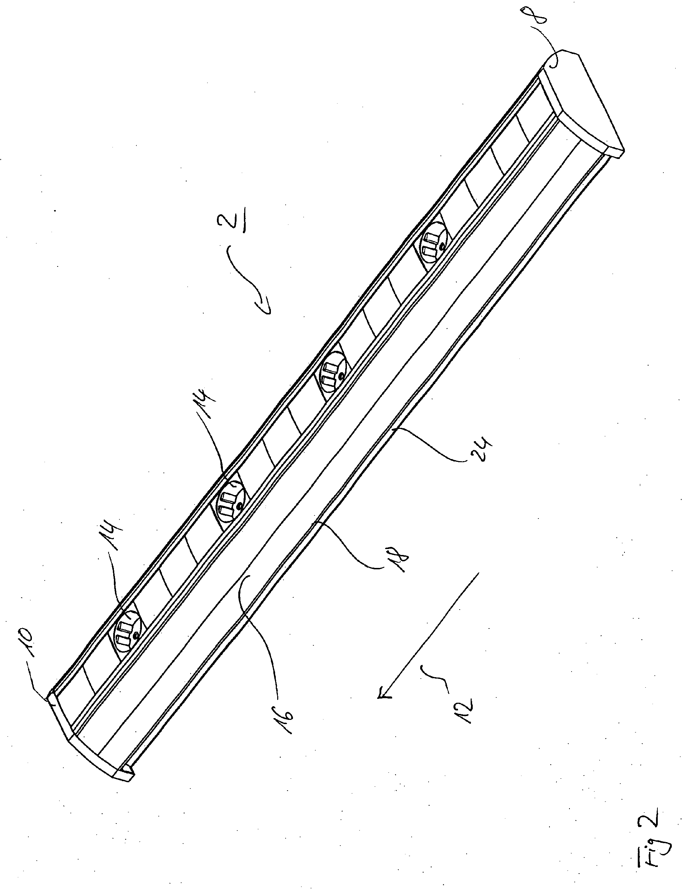

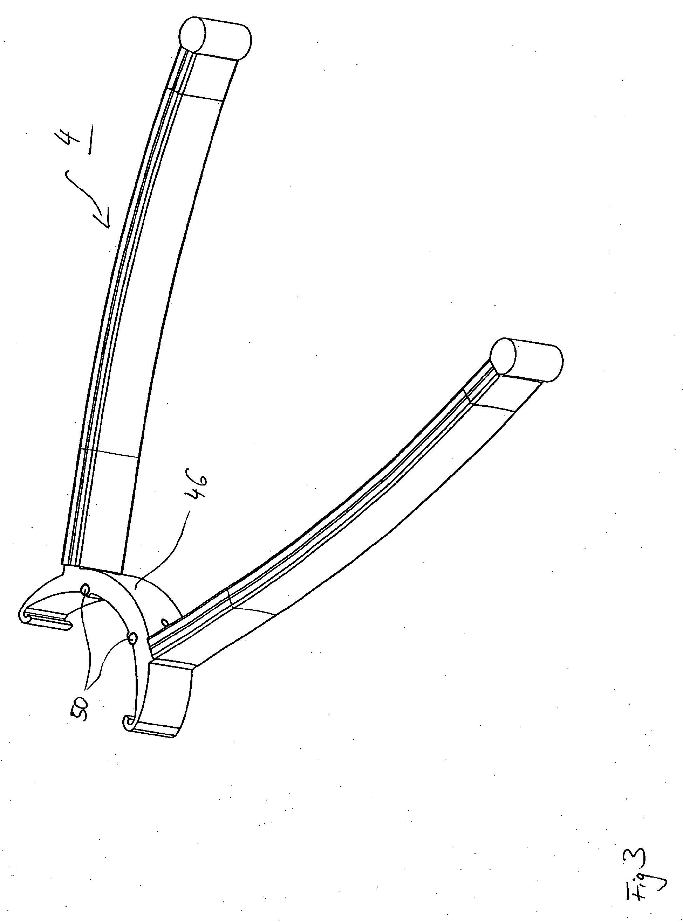

Der Aufbau eines Tragarms 4 ergibt sich insbesondere auch aus der perspektivischen Darstellung gemäß Fig. 3. Der Aufbau der Anschlussdosenleiste 2 ohne Tragarme 4 ergibt sich aus der Darstellung gemäß Fig. 2.

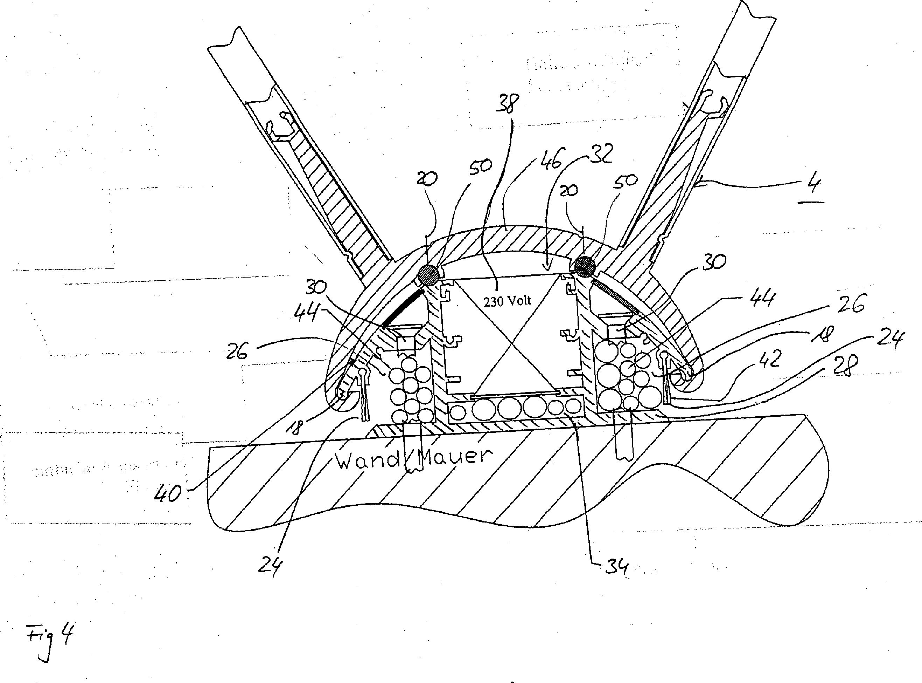

Die Anschlussdosenleiste 2 umfasst ein Traggehäuse 16, welches als ein Metallprofil nach Art eines Stranggussprofils mit in Längsrichtung 12 gleich bleibender Querschnittskontur ausgebildet ist. Endseitig ist das Traggehäuse 16 durch das Fußteil 8 und die Abdeckkappe 10 verschlossen. Der mittlere Bereich, in dem die Anschlussdosen 14 angeordnet sind, ist zwischen den Anschlussdosen 14 mit Blenden verschlossen, so dass insgesamt das Traggehäuse 16 vollständig abgeschlossen und ein effektiver Berührungsschutz gewährleistet ist. Lediglich an den beiden Seiten zur Rückseite des Traggehäuses 16 hin erstreckt sich über die gesamte Länge der Anschlussdosenleiste 2 ein Längsschlitz 24, über den ein Kabelkanal 26 (Fig. 4) zugänglich ist.

Die Anschlussdosen 14 werden über ein gemeinsames Stromversorgungskabel mit angeschlagenem Netzstecker (nicht dargestellt) versorgt. Dieser Netzstecker tritt im Bereich des Fußteils 8 aus dem Traggehäuse 16 aus und dient zum Anschluss der Anschlussdosenleiste 2 an eine fest installierten Gebäude-Steckdose.

Der einzelne Aufbau der Anschlussdosenleiste 2 wird nachfolgend anhand der Querschnittsdarstellung der Fig. 4 näher erläutert. Anhand Fig. 4 ist gut zu erkennen, dass das Traggehäuse 16 als ein Profil ausgebildet ist, welches eine rückseitige Anlagefläche 28 aufweist, mit der es gegen eine Gebäudewand 29 oder auch -decke mit Hilfe von Schrauben 30 verschraubbar ist. Im zentralen Bereich des Traggehäuses 16 ist eine Mittenkammer 32 ausgebildet, an deren Rückseite sich eine zusätzliche interne Verdrahtungskammer 34 anschließt. Seitlich zu diesen beiden Kammern 32,34 ist jeweils eine den Kabelkanal 26 bildende Seitenkammer vorgesehen. In die zentrale Mittenkammer 32 ist eine vorkonfektionierte und die Steckdosen 14 enthaltende Baueinheit 38 eingesetzt. Die Strom- und Spannungsversorgung erfolgt daher über die Mittenkammer 32 und ist somit durch die Profilwände räumlich getrennt von den Kabelkanälen 26. Die rückseitige interne Verdrahtungskammer 34 dient zur gegebenenfalls erforderlichen zusätzlichen internen Verdrahtung innerhalb der Anschlussdosenleiste 2. Diese Verdrahtungskammer 34 wird lediglich beim Zusammenbau der Anschlussdosenleiste 2 benötigt, ist ansonsten jedoch für den Endkunden nicht zugänglich.

Das Traggehäuse 16 weist zur Frontseite hin eine sichtbare, im Ausführungsbeispiel gebogene Schürze 40 auf. Diese ist von der rückseitigen Auflagefläche 28 beabstandet, so dass beidseitig ein Längsschlitz 24 ausgebildet ist und die Kabelkanäle 26 über diese Längsschlitze 24 von außen zugänglich sind. Der Längsschlitz 24 ist hierbei jeweils durch Lamellen 42 abgedeckt, die demnach eine Art reversible Blende für den Längsschlitz 24 bilden.

Über den Längsschlitz 25 ist ein Zugang zu den Kabelkanälen 26 geschaffen, über den weitere Kabel 44 problemlos eingelegt werden können. Durch die zwei getrennten Kabelkanäle 26 ist eine getrennte Kabelführung für unterschiedliche Kabel 44 ermöglicht. Die Kabelkanäle 26 dienen insbesondere zur Verlegung beispielsweise von Lautsprecherkabeln von einem Verstärker zu Lautsprechern, zur Verlegung von Signalkabeln, beispielsweise von einem Abspielgerät zu einem Verstärker, zur Verlegung von Daten-, Computer-. Audiokabeln, etc.

Korrespondierend zu der Schürze 40 weist der Tragarm 4 einen im Ausführungsbeispiel halbkreisförmig gebogenen Halteflansch 46 auf, von dem die beiden Teilarme des Tragarms 4 nach vorne abstehen. Im Ausführungsbeispiel sind die Teilarme ebenfalls gebogen ausgeführt. Die Teilarme sind hierbei in einer bevorzugten Ausgestaltung insbesondere teleskopartig verlängerbar, so dass sie an Geräte 6 mit unterschiedlichen Gerätetiefen angepasst werden können. Der Halteflansch 46 hintergreift mit seinen umgebogenen Endstücken den Endbereich der Schürze 40. Die Schürze 40 bildet daher endseitig das Führungsprofil 18 aus. Insgesamt greift die Schürze 40 nach Art einer Feder in eine durch den Halteflansch 46 gebildete Nut ein. Zur Vorderseite hin stützt sich der Halteflansch 46 an den seitlichen Begrenzungsstegen der Mittenkammer 32 ab. Um hier bei einem Verschieben des Tragarms 4 ein Verkratzen der vorderseitigen Oberfläche des Traggehäuses 16 zu vermeiden, sind Schutzelemente angeordnet, die nach Art von Gummilippen 50 ausgebildet sind.

Insgesamt ist durch die Ausgestaltung der Anschlussdosenleiste 2 mit den integrierten Tragarmen 4 eine multifunktionale Multimedia-Säule geschaffen, die die mechanische Tragfunktion und die Funktion des Kabelmanagements sowie die Versorgung der Geräte, insbesondere Stromversorgung in sich vereint. Hierdurch ist ein sehr kompakter und vom Design her ansprechender Aufbau erreicht, bei dem problemlos sämtliche Kabel, die zur Versorgung und zum Anschluss der elektrischen Geräte 6 erforderlich sind, im Traggehäuse 16 versteckt und damit von außen nicht sichtbar sind.

### Bezugszeichenliste

- 2: Anschlussdosenleiste
- 4: Tragarm
- 6: elektrisches Gerät
- 8: Fußteil
- 10: Abdeckkappe
- 12: Längsrichtung
- 14: Strom-Steckdosen
- 16: Traggehäuse
- 18: Führungsprofil
- 20: Klemmschraube
- 22: Gewindebohrung
- 24: Längsschlitz
- 26: Kabelkanal
- 28: Auflagefläche
- 30: Schrauben
- 32: Mittenkammer
- 34: Verdrahtungskammer
- 38: Baueinheit
- 40: Schürze
- 42: Lamelle
- 44: Kabel
- 46: Halteflansch
- 50: Gummilippe

## Patentansprüche

1. Anschlussdosenleiste (2) mit mehreren in Reihe angeordneten und von außen zugänglichen Anschlussdosen (14), die in einem sich in Längsrichtung (12) erstreckenden Traggehäuse (16) integriert sind, wobei am Traggehäuse (16) ein Tragelement (4) zum Tragen eines elektrischen Geräts (6) angebracht oder anbringbar ist und im Traggehäuse (16) neben der Verkabelung der Anschlussdosen (14) ein zusätzlicher sich in Längsrichtung (12) erstreckender Kabelkanal (26) zum Einlegen eines weiteren Kabels (44) für das elektrische Gerät (6) integriert ist, und wobei der Kabelkanal (26) von außen zumindest in Teilstücken zugänglich ist, so dass das weitere Kabel (44) in den Kabelkanal (26) einlegbar ist.

2. Anschlussdosenleiste (2) nach Anspruch 1,
bei der das Tragelement als ein vorderseitig abstehender Tragarm (4) ausgebildet ist.

3. Anschlussdosenleiste (2) nach Anspruch 1 oder 2,
bei der das Traggehäuse (16) eine Halteeinrichtung (18) für das Tragelement aufweist.

4. Anschlussdosenleiste (2) nach einem der vorhergehenden Ansprüche,
bei der das Traggehäuse (16) außenseitig ein sich insbesondere in Längsrichtung (12) durchgängig erstreckendes Führungsprofil (18) aufweist, an dem das Tragelement (4) befestigt bzw. befestigbar ist.

5. Anschlussdosenleiste (2) nach einem der vorhergehenden Ansprüche,
bei der in Längsrichtung (12) mehrere Tragelemente (4) für mehrere elektrische Geräte (6) angebracht oder anbringbar sind.

6. Anschlussdosenleiste (2) nach einem der vorhergehenden Ansprüche,
bei der das Traggehäuse (16), zumindest die Teilbereiche, die zur Aufnahme der vom elektrischen Gerät (6) ausgeübten mechanischen Tragkräfte vorgesehen sind, aus Metall bestehen.

7. Anschlussdosenleiste (2) nach einem der vorhergehenden Ansprüche,
bei der als Anschlussdosen Strom-Steckdosen (14) vorgesehen sind, die über eine gemeinsame mit einem Netzstecker versehene Anschlussleitung angeschlossen sind.

8. Anschlussdosenleiste (2) nach einem der vorhergehenden Ansprüche,
bei der weitere Arten von Anschlussdosen wie Telefondosen, Netzwerkdosen, Antennen- oder Sat-Dosen vorgesehen sind.

9. Anschlussdosenleiste (2) nach Anspruch 8,
bei der die jeweilige Anschlussdose (14) mit einer artspezifischen Anschlussleitung angeschlossen ist, deren der Anschlussdose abgewandtes Ende von außen zugänglich und mit einem artspezifischen Stecker versehen ist.

10. Anschlussdosenleiste (2) nach einem der vorhergehenden Ansprüche,
bei der die Anschlussdosen (14) einzeln im Traggehäuse (16) angeordnet und in Längsrichtung (12) zumindest ein Teilstück verschiebbar sind.

11. Anschlussdosenleiste (2) nach einem der vorhergehenden Ansprüche,
bei der eine Stromversorgung der Anschlussdosen (14) über eine Stromschiene und Schleifkontakte erfolgt.

12. Anschlussdosenleiste (2) nach einem der vorhergehenden Ansprüche,
bei der eine Anschlussleitung für die Anschlussdosen für einen axialen Längenausgleich ausgebildet ist.

13. Anschlussdosenleiste (2) nach einem der vorhergehenden Ansprüche,
bei der die Anschlussdosen (14) in einer abgeschlossenen Baueinheit (38) integriert sind und die Baueinheit (38) im Traggehäuse (16) angeordnet ist.

14. Anschlussdosenleiste (2) nach Anspruch 13,
bei der die Baueinheit (38) modular nach Art eines Baukastensystems aufgebaut ist.

15. Anschlussdosenleiste (2) nach einem der vorhergehenden Ansprüche,
bei der das Traggehäuse (16) ein Tragprofil umfasst.

16. Anschlussdosenleiste (2) nach Anspruch 15,
bei der das Tragprofil eine seitliche den Kabelkanal (26) bildende Kammer aufweist, die über einen Längsschlitz (24) von außen zugänglich ist.

17. Anschlussdosenleiste (2) nach Anspruch 15 oder 16 ,
bei der das Tragprofil eine Mittenkammer (32) umfasst, in der die Anschlussdosen (14) und insbesondere die Baueinheit (38) mit den darin integrierten Anschlussdosen (14) angeordnet sind.

18. Anschlussdosenleiste (2) nach Anspruch 17,
bei der insbesondere rückseitig an die Mittenkammer (32) anschließend eine zusätzliche interne, von außen nicht zugängliche Verdrahtungskammer (34) vorgesehen ist.

19. Anschlussdosenleiste (2) nach einem der vorhergehenden Ansprüche,
bei der das Traggehäuse (16) ein Fußteil (8) zum Aufstellen auf einem Fußboden aufweist.

20. Anschlussdosenleiste (2) nach einem der vorhergehenden Ansprüche,
bei der das Traggehäuse (16) für eine feste Verbindung mit einer Gebäudewand ausgebildet ist und hierzu an seiner Rückseite Bohrlöcher aufweist.

21. Geräteträger, insbesondere Multimedia-Rack, mit einer Steckdosenleiste nach einem der vorhergehenden Ansprüche.
